(19) **Europäisches Patentamt / European Patent Office / Office européen des brevets**

(11) **EP 4 071 214 A1**

(12) # EUROPEAN PATENT APPLICATION
published in accordance with Art. 153(4) EPC

(43) Date of publication:
**12.10.2022 Bulletin 2022/41**

(21) Application number: **21747073.1**

(22) Date of filing: **27.01.2021**

(51) International Patent Classification (IPC):
*C08L 63/00* (2006.01)     *C08J 5/04* (2006.01)

(52) Cooperative Patent Classification (CPC):
**C08J 5/04; C08L 63/00**

(86) International application number:
**PCT/JP2021/002755**

(87) International publication number:
**WO 2021/153584 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.01.2020  JP 2020013249**

(71) Applicant: **Toray Industries, Inc.**
**Tokyo, 103-8666 (JP)**

(72) Inventors:
• **TAKAMOTO, Tatsuya**
  **Nagoya-shi, Aichi 455-8502 (JP)**
• **ISHIKAWA, Norikazu**
  **Nagoya-shi, Aichi 455-8502 (JP)**
• **TOMIOKA, Nobuyuki**
  **Nagoya-shi, Aichi 455-8502 (JP)**

(74) Representative: **Prüfer & Partner mbB**
**Patentanwälte · Rechtsanwälte**
**Sohnckestraße 12**
**81479 München (DE)**

(54) **EPOXY RESIN COMPOSITION, MOLDING MATERIAL FOR FIBER-REINFORCED COMPOSITE MATERIAL, AND FIBER-REINFORCED COMPOSITE MATERIAL**

(57)     The purpose of the present invention is to provide: an epoxy resin composition having both excellent dispersibility of a solid curing agent and excellent impregnation of reinforcing fibers; a molding material for the fiber-reinforced composite material that has excellent dispersibility of the solid curing agent in the post-thickened resin; and a fiber-reinforced composite material that has excellent appearance quality and mechanical characteristics and little unevenness in physical properties. In order to achieve the aforementioned purpose, this epoxy resin composition has the following configuration. The epoxy resin composition includes all components (A)-(C). The degree of dispersion of component (B) in component (A) is 0.1-0.8, the viscosity at 25°C is 0.1-100 Pa·s, and the glass transition temperature of an epoxy resin cured product at any hardness between 85%-95% is at least 110°C. Component (A): An epoxy resin having at least two epoxy groups in each molecule Component (B): A solid curing agent Component (C): A dispersant miscible with component (A)

**Description**

TECHNICAL FIELD

The present invention relates to an epoxy resin composition preferably used in fiber-reinforced composite materials such as aerospace members and automobile members, as well as to a molding material for a fiber-reinforced composite material and a fiber-reinforced composite material containing the epoxy resin composition.

BACKGROUND ART

A fiber-reinforced composite material, which contains a reinforcing fiber and a matrix resin, can be designed using advantages of the reinforcing fiber and the matrix resin, so that the fiber-reinforced composite material has been more widely used in the field of aerospace as well as in the fields of sports, general industry, and the like.

A fiber-reinforced composite material, which contains a reinforcing fiber and a matrix resin, can be designed using advantages of the reinforcing fiber and the matrix resin, so that the fiber-reinforced composite material has been more widely used in the fields of aerospace and automobile as well as in the fields of sports, general industry, and the like. The fiber-reinforced composite materials are produced by a hand lay-up method, a filament winding method, a pultrusion method, a resin transfer molding (RTM) method, an autoclave molding method of a prepreg, a press forming method of a molding material for a fiber-reinforced composite material, or the like.

Examples of the molding material for a fiber-reinforced composite material used in the press forming method include prepregs, tow prepregs, bulk molding compounds (BMCs), and sheet molding compounds (SMCs). These molding materials for a fiber-reinforced composite material are obtained by impregnating a reinforcing fiber with a matrix resin.

For the reinforcing fiber, a glass fiber, an aramid fiber, a carbon fiber, a boron fiber, or the like is used. For the matrix resin, either a thermosetting resin or a thermoplastic resin is used, but a thermosetting resin easy to impregnate into the reinforcing fiber is often used. For the thermosetting resin, an epoxy resin, an unsaturated polyester resin, a vinyl ester resin, a phenol resin, a bismaleimide resin, a cyanate resin, or the like is used. Among them, epoxy resins are widely used from the viewpoint of adhesiveness to the reinforcing fiber, dimensional stability, and mechanical properties such as strength and stiffness of the obtained fiber-reinforced composite material.

When a molding material for a fiber-reinforced composite material such as an epoxy resin composition and a prepreg is stored at room temperature for a long period of time, an unintended curing reaction proceeds, and therefore a solid curing agent that is solid at room temperature is used from the viewpoint of storage stability. However, when a solid curing agent is used, the viscosity of the resin at room temperature is increased, the impregnating property into the reinforcing fiber is lowered, the matrix resin does not sufficiently enter the reinforcing fiber bundle, and in order to sufficiently exhibit the excellent mechanical properties of the reinforcing fiber, it is necessary to reduce the viscosity of the resin. In view of such circumstances, a technique for impregnating a reinforcing fiber with a matrix resin solution diluted with a solvent is disclosed (Patent Document 1).

In addition, there has been the problem that the solid curing agent is aggregated in the matrix resin, the amount of the curing agent in the reinforcing fiber bundle is reduced, the curing reaction is partially incomplete, and unevenness occurs in the mechanical properties. Furthermore, since the curing agent that does not enter the reinforcing fiber is deposited on the reinforcing fiber and deteriorates the surface appearance, it has been necessary to uniformly disperse the solid curing agent in the matrix resin. In view of such circumstances, as a method for uniformly mixing a solid curing agent, a method of uniformly dissolving a solid curing agent in a solvent such as dimethylformamide in advance and using the solution is disclosed (Patent Document 2).

PRIOR ART DOCUMENTS

PATENT DOCUMENTS

Patent Document 1: Japanese Patent Laid-open Publication No. 2003-213015
Patent Document 2: Japanese Patent Laid-open Publication No. H02-286722

SUMMARY OF THE INVENTION

PROBLEMS TO BE SOLVED BY THE INVENTION

According to the method described in Patent Document 1, a molding material for a thin fiber-reinforced composite material such as a prepreg from which a solvent can be easily removed can be applied because the solvent can be easily removed. However, in a thick sheet such as SMC, it is difficult to remove the solvent, and the solvent remains inside, so that voids are formed during molding, and there is the problem that unevenness occurs in the mechanical properties of the obtained fiber-reinforced composite material.

In addition, according to the method described in Patent Document 2, a solid curing agent can be uniformly dispersed in a matrix resin by uniformly dissolving the solid curing agent in advance in a solvent such as dimethylformamide. However, the solvent remains inside, so that voids are formed during molding, and there is the problem that unevenness occurs in the mechanical properties of the obtained fiber-reinforced composite material.

As described above, in the conventional technique, there is no technique capable of uniformly dispersing the solid curing agent in the matrix resin while maintaining a good impregnating property into the reinforcing fiber. Therefore, an object of the present invention is to ameliorate the disadvantages of the prior art and to provide an epoxy resin composition that is excellent in the dispersibility of a solid curing agent and the impregnating property into a reinforcing fiber, a molding material for a fiber-reinforced composite material that is excellent in the dispersibility of a solid curing agent in a thickened resin by using the epoxy resin composition, and a fiber-reinforced composite material that is excellent in appearance quality and mechanical properties and has little unevenness in physical properties by using the molding material for a fiber-reinforced composite material.

SOLUTIONS TO THE PROBLEMS

In order to solve the above problems, the epoxy resin composition of the present invention includes all of components (A) to (C) below, in which the dispersity of the component (B) in the component (A) is 0.1 to 0.8, the viscosity at 25°C is 0.1 to 100 Pa·s, and the glass transition temperature of a cured epoxy resin at any degree of cure in the range of 85 to 95% is 110°C or higher:

the component (A): an epoxy resin having two or more epoxy groups in a molecule,
the component (B): a solid curing agent, and
the component (C): a dispersant compatible with the component (A).

The molding material for a fiber-reinforced composite material of the present invention is a molding material for a fiber-reinforced composite material including a thickened resin and a reinforcing fiber, in which the thickened resin is obtained by bringing the epoxy resin composition of the present invention into a semi-cured condition. Furthermore, the fiber-reinforced composite material of the present invention is obtained by molding the molding material for a fiber-reinforced composite material of the present invention.

EFFECTS OF THE INVENTION

The epoxy resin composition of the present invention is superior in dispersibility of a solid curing agent and an impregnating property into a reinforcing fiber to a conventional epoxy resin composition, so that a molding material for a fiber-reinforced composite material that has excellent dispersibility of the solid curing agent in a thickened resin can be provided. By using such a molding material for a fiber-reinforced composite material, it is possible to provide a fiber-reinforced composite material that is excellent in appearance quality and mechanical properties and has little unevenness in physical properties.

EMBODIMENT OF THE INVENTION

A preferred embodiment of the present invention will be described below. First, an epoxy resin composition according to the present invention will be described.

The epoxy resin composition of the present invention contains a component (A), which is an epoxy resin having two or more epoxy groups in a molecule. The component (A) is a component necessary for exhibiting heat resistance and mechanical properties. Specific examples of the component (A) include, as for an epoxy resin having two epoxy groups, a bisphenol A type epoxy resin, a bisphenol F type epoxy resin, a bisphenol S type epoxy resin, a biphenyl type epoxy resin, a dicyclopentadiene type epoxy resin, and epoxy resins obtained by modifying the above-mentioned resins. Examples of an epoxy resin having three or more epoxy groups include an aliphatic epoxy resin, a phenol novolac type epoxy resin, a cresol novolac type epoxy resin, a cresol type epoxy resin, glycidyl amine type epoxy resins such as tetraglycidyl diaminodiphenylmethane, triglycidyl aminophenol, and tetraglycidylamine, glycidyl ether type epoxy resins such as tetrakis(glycidyloxyphenyl)ethane and tris(glycidyloxymethane), epoxy resins obtained by modifying the above-mentioned resins, and brominated epoxy resins obtained by brominating the above-mentioned epoxy resins, but are not limited thereto. Further, two or more of these epoxy resins may be used in combination.

Among them, a bisphenol A type epoxy resin, a bisphenol F type epoxy resin, a bisphenol S type epoxy resin, a phenol novolac type epoxy resin, and a cresol novolac type epoxy resin are particularly preferably used. Use of the above-mentioned epoxy resins exerts an additional effect that a fiber-reinforced composite material containing the epoxy resin has improved mechanical properties as compared with the case where an epoxy resin having high rigidity, such as an epoxy resin having a naphthalene group in a molecule, is used. It is presumed that this is because an epoxy resin having high rigidity is likely to be strained because the epoxy resin comes to have an increased cross-linking density when being cured in a short time, whereas the above-mentioned epoxy resin is unlikely to cause such a problem.

Examples of commercially available products of the aliphatic epoxy resin include "DENACOL (registered trademark)" EX-313, EX-314, EX-321, EX-411, EX-421, EX-512, EX-521, EX-611, EX-612, EX-614, EX-614B, and EX-622 (all manufactured by Nagase ChemteX Corporation).

Examples of commercially available products of the bisphenol A type epoxy resin include "jER (registered trademark)" 825, "jER (registered trademark)" 826, "jER (registered trademark)" 827, "jER (registered trademark)" 828, "jER (registered trademark)" 834, "jER (registered trademark)" 1001, "jER (registered trademark)" 1002, "jER (registered trademark)" 1003 (all manufactured by Mitsubishi Chemical Corporation), "EPICLON (registered trademark)" 850 (manufactured by DIC Corporation), "Epotohto (registered trademark)" YD-128, YD-128G, and YD-128S (manufactured by NIPPON STEEL Chemical & Material Co., Ltd.), and "DER (registered trademark)"-331 (manufactured by Dow Plastics).

Examples of commercially available products of the bisphenol F type epoxy resin include "jER (registered trademark)" 806, "jER (registered trademark)" 807, "jER (registered trademark)" 1750, "EPICLON (registered trademark)" 830 (manufactured by DIC Corporation), "Epotohto (registered trademark)" YDF-170, and "Epotohto (registered trademark)" YDF 2001. Examples of commercially available products of a tetramethyl bisphenol F type epoxy resin, which is an alkyl-substituted derivative, include "Epotohto (registered trademark)" YSLV-80Y/X (NIPPON STEEL & SUMIKIN CHEMICAL CO., LTD.).

Examples of the bisphenol S type epoxy resin include "EPICLON (registered trademark)" EXA-1515 (manufactured by DIC Corporation).

Examples of commercially available products of the phenol novolac type epoxy resin include "jER (registered trademark)" 152 and "jER (registered trademark)" 154 (both manufactured by Mitsubishi Chemical Corporation), and "EPICLON (registered trademark)" N-740, "EPICLON (registered trademark)" N-770, and "EPICLON (registered trademark)" N-775 (all manufactured by DIC Corporation).

Examples of commercially available products of the cresol novolac type epoxy resin include "EPICLON (registered trademark)" N-660, "EPICLON (registered trademark)" N-665, "EPICLON (registered trademark)" N-670, "EPICLON (registered trademark)" N-673, and "EPICLON (registered trademark)" N-695 (all manufactured by DIC Corporation), and EOCN-1020, EOCN-102S, and EOCN-104S (all manufactured by Nippon Kayaku Co., Ltd.).

The epoxy resin composition of the present invention contains the component (B), which is a solid curing agent. The component (B) is the curing agent for the component (A) and is a curing agent in a solid state at 25°C.

The component (B) is not particularly limited as long as it is a curing agent in a solid state at 25°C but is preferably an aromatic amine curing agent, dicyandiamide, or a derivative thereof. The aromatic amine curing agent is not particularly limited as long as it is an aromatic amine used as an epoxy resin curing agent, and specific examples thereof include 3,3'-diaminodiphenyl sulfone (3,3'-DDS), 4,4'-diaminodiphenyl sulfone (4,4'-DDS), diaminodiphenylmethane (DDM), 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, diaminodiphenyl ether (DADPE), bisaniline, benzyldimethylaniline, 2-(dimethylaminomethyl)phenol (DMP-10), 2,4,6-tris(dimethylaminomethyl)phenol (DMP-30), and a 2-ethylhexanoic acid ester of 2,4,6-tris(dimethylaminomethyl)phenol. These may be used singly or as a mixture of two or more thereof.

Examples of a commercially available product of the aromatic amine curing agent include Seikacure-S (manufactured by Wakayama Seika Kogyo Co., Ltd.), MDA-220 (manufactured by Mitsui Chemicals, Inc.), "jERcure (registered trademark)" W (manufactured by Japan Epoxy Resins Co., Ltd.), 3,3'-DAS (manufactured by Mitsui Chemicals, Inc.), and "Lonzacure (registered trademark)" M-DEA, "Lonzacure (registered trademark)" M-DIPA, "Lonzacure (registered trademark)" M-MIPA and "Lonzacure (registered trademark)" DETDA 80 (each manufactured by Lonza).

Examples of commercially available products of dicyandiamide include "jERcure (registered trademark)" DICY7, "jERcure (registered trademark)" DICY15, "jERcure (registered trademark)" DICY50 (all manufactured by Mitsubishi Chemical Corporation), "DYHARD (registered trademark)" 100, "DYHARD (registered trademark)" 100S, "DYHARD (registered trademark)" 100SF, (all manufactured by AlzChem Trostberg GmbH), "Amicure (registered trademark)" Cg-325G, "Amicure (registered trademark)" CG-1200G, and "Dicyanex (registered trademark)" 1400F (all manufactured by Evonik Industries AG).

The content of the component (B) is preferably 1 to 50 parts by mass, more preferably 2 to 50 parts by mass, still more preferably 3 to 25 parts by mass, with respect to 100 parts by mass of the component (A), from the viewpoint of heat resistance and mechanical properties. When the content of the component (B) is 1 part by mass or more, a sufficient effect of improving the curability is likely to be obtained. In addition, when the content of the component (B) is 50 parts by mass or less, the cured epoxy resin obtained by curing the epoxy resin composition is likely to have higher heat resistance.

The mean particle diameter of the component (B) is preferably 0.5 to 50 $\mu$m. The upper limit of the mean particle diameter is more preferably 25 $\mu$m, still more preferably 10 $\mu$m, most preferably 3 $\mu$m. The mean particle diameter of the component (B) in the present invention is an arithmetic mean value of the mean particle diameter of each particle extracted in an observation image observed by observation means such as an optical microscope and an electron microscope. The mean particle diameter of each particle is calculated by averaging diameters each connecting two points on the outer periphery of each particle and passing through the center of gravity. In the present invention, the mean particle diameter of (B) is calculated from the mean particle diameter of each particle and the mean value thereof using a dispersed image acquired by observation means such as an optical microscope and an electron microscope and using image processing software "Image Pro Premier 3D 64-bit Ver 9.2" manufactured by Media Cybernetics, Inc. When the mean particle diameter of the component (B) is 50 $\mu$m or less, for example, in the case of use in prepreg applications, when the resin composition is impregnated into the carbon fiber bundle by heat and pressure, the component (B) easily enters the carbon fiber bundle and is less likely to be left on the surface layer of the carbon fiber bundle.

From the viewpoint of long-term storage stability at room temperature and viscosity stability during prepregging, the component (B) is preferably dicyandiamide or a derivative thereof.

Examples of the curing agent other than the curing agent described above include amines such as alicyclic amines, phenol compounds, acid anhydrides, polyaminoamides, organic acid hydrazides, and isocyanates. These curing agents may be used in combination with an aromatic amine curing agent, dicyandiamide, or a derivative thereof.

The epoxy resin composition of the present invention contains the component (C), which is a dispersant compatible with the component (A). The component (C) has an effect of uniformly dispersing the component (B) in the component (A). Specific examples of the component (C) include a surfactant, a high molecular weight dispersant, and an ionic liquid.

From the viewpoint of compatibility with the component (A), the component (C) is preferably a liquid at 25°C, and the viscosity of the component (C) at 25°C measured with a rheometer is preferably in the range of 0.01 to 50 Pa·s. The upper limit of the viscosity is more preferably 25 Pa·s, still more preferably 5 Pa·s, most preferably 3 Pa·s. By setting the viscosity of the component (C) at 25°C to 50 Pa·s or less, the component (B) can be efficiently dispersed without impairing the compatibility with the component (A). Here, the viscosity of the component (C) refers to a complex viscosity at a gap of 1 mm, a vibration mode, a swing angle $\varphi$ = 0.0025 rad, a frequency of 1 Hz, and 25°C measured using a rheometer "Physica MCR 501" manufactured by Anton Paar GmbH and using a parallel plate of 25 $\varphi$.

The weight-average molecular weight of the component (C) is preferably in the range of 150 to 100,000. The upper limit of the weight-average molecular weight is more preferably 50,000, still more preferably 10,000. When the weight-average molecular weight is 100,000 or less, compatibility with the component (A) can be enhanced. When the weight-average molecular weight is 150 or more, the component can be stably adsorbed to the component (B), and the dispersion effect can be improved.

The component (C) is not limited to one type of dispersant, and two or more types of dispersants such as a surfactant and a high molecular weight dispersant, and a surfactant and an ionic liquid can be used in combination.

Surfactants are mainly classified into anionic, cationic, nonionic, and amphoteric surfactants, and suitable types and blending amounts can be appropriately selected and used according to required characteristics.

The anionic surfactant is not particularly limited, and specific examples thereof include fatty acid salts, polysulfonic acid salts, polycarboxylic acid salts, alkyl sulfuric acid ester salts, alkyl aryl sulfonic acid salts, alkyl naphthalene sulfonic acid salts, dialkyl sulfonic acid salts, dialkyl sulfosuccinic acid salts, alkyl phosphoric acid salts, polyoxyethylene alkyl ether sulfate salts, polyoxyethylene alkyl aryl ether sulfate salts, naphthalene sulfonic acid formalin condensates, polyoxyethylene alkyl phosphoric acid sulfonic acid salts, glycerol borate fatty acid esters, and polyoxyethylene glycerol fatty acid esters. Specific examples thereof include sodium dodecylbenzene sulfonate, sodium lauryl acid sulfate, sodium polyoxyethylene lauryl ether sulfate, polyoxyethylene nonylphenyl ether sulfate ester salts, and sodium salts of $\beta$-naphthalene sulfonic acid formalin condensates. Examples of a commercially available anionic surfactant include LIPON LS-250 (manufactured by Lion Corporation).

Examples of the cationic surfactant include alkylamine salts and quaternary ammonium salts. Specific examples thereof include ammonium stearate, stearylamine acetate, trimethylcocoammonium chloride, trimethyltallowammonium chloride, dimethyldioleylammonium chloride, methyl oleyl diethanol chloride, tetramethylammonium chloride, laurylpyridinium chloride, laurylpyridinium bromide, laurylpyridinium disulfate, cetylpyridinium bromide, 4-alkylmercaptopyridine, poly(vinylpyridine)-dodecyl bromide, dodecylbenzyltriethylammonium chloride, tetradecyldimethylbenzylammonium chloride, and distearyldimethylammonium chloride. Examples of commercially available cationic surfactants include "NISSANCATION (registered trademark)" M$_2$-100R (manufactured by NOF CORPORATION), and LIPOQUAD 2HP Flake (manufactured by Lion Corporation).

Examples of the amphoteric surfactant include aminocarboxylate salts.

Examples of the nonionic surfactant include polyoxyethylene alkyl ethers, polyoxyalkylene derivatives, polyoxyethylene phenyl ethers, sorbitan fatty acid esters, polyoxyethylene sorbitan fatty acid esters, and alkyl allyl ethers, and specific examples thereof include polyoxyethylene lauryl ethers, sorbitan fatty acid esters, and polyoxyethylene octylphenyl ethers.

The surfactant is not limited to one type, and two or more types of surfactants can be used in combination.

Specific examples of the high molecular weight dispersant include polycarboxylic acid esters such as polyurethanes and polyacrylates, unsaturated polyamides, polycarboxylic acids, polycarboxylic acid (partial) amine salts, polycarboxylic acid ammonium salts, polycarboxylic acid alkylamine salts, polysiloxanes, long-chain polyaminoamide phosphate salts, hydroxyl group-containing polycarboxylic acid esters, modified products thereof, polyalkylene polyamines, oily dispersants such as amides formed by a reaction between poly(lower alkylene imine) and a polyester having a free carboxyl group and salts thereof, water-soluble resins and water-soluble polymer compounds such as (meth)acrylic acid-styrene copolymers, (meth)acrylic acid- (meth)acrylic acid ester copolymers, styrene-maleic acid copolymers, polyvinyl alcohol, and polyvinylpyrrolidone, polyester type resins, modified polyacrylate type resins, ethylene oxide/propylene oxide addition compounds, and phosphoric acid ester type resins. These can be used alone or in combination of two or more but are not necessarily limited thereto.

Examples of commercially available high molecular weight dispersants include DISPERBYK-101, 103, 107, 108, 110, 111, 116, 130, 140, 154, 161, 162, 163, 164, 165, 166, 170, 171, 174, 180, 181, 182, 183, 184, 185, 190, 2000, 2001, 2020, 2025, 2050, 2070, 2095, 2150, and 2155, Anti-Terra-U, 203, and 204, BYK-P 104, P 104 S, P 9920, 220 S, 6919, 9076, and 9077, Lactimon, Lactimon-WS, Bykumen (manufactured by BYK Japan KK), SOLSPERSE-3000, 9000, 13000, 13240, 13650, 13940, 16000, 17000, 18000, 20000, 21000, 24000, 26000, 27000, 28000, 31845, 32000, 32500, 32550, 33500, 32600, 34750, 35100, 36600, 38500, 41000, 41090, 53095, 55000, 76500 (manufactured by Lubrizol Japan Ltd.), EFKA-46, 47, 48, 452, 4008, 4009, 4010, 4015, 4020, 4047, 4050, 4055, 4060, 4080, 4400, 4401, 4402, 4403, 4406, 4408, 4300, 4310, 4320, 4330, 4340, 450, 451, 453, 4540, 4550, 4560, 4800, 5010, 5065, 5066, 5070, 7500, 7554, 1101, 120, 150, 1501, 1502, and 1503 (manufactured by Ciba Japan K.K.), "AJISPER (registered trademark)" PA111, PB711, PB821, PB822, and PB824 (manufactured by Ajinomoto Fine-Techno Co., Inc.), "FILLANOL (registered trademark)" PA-075F, PA-085C, and PA-107P, "ESLEAM (registered trademark)" AD-3172M, AD-374M, and AD-508E (manufactured by NOF CORPORATION), "Hypermer (registered trademark)" KD-1, KD-2, and KD-3 (manufactured by Croda International Plc), and "Phospholan (registered trademark)" PS-131, PS-220, PS-222, and PS-236 (manufactured by Akzo Nobel N.V.).

Examples of the ionic liquid include organic compound salts such as imidazolium salts, pyridinium salts, ammonium salts, and phosphonium salts, which are liquid at normal temperature.

Examples of the ionic liquid that is an imidazolium salt include 1,3-dimethylimidazolium methylsulfate, 1-ethyl-3-methylimidazolium bis(pentafluoroethylsulfonyl)imide, 1-ethyl-3-methylimidazolium bis(trifluoroethylsulfonyl)imide, 1-ethyl-3-methylimidazolium bromide, 1-ethyl-3-methylimidazolium chloride, 1-ethyl-3-methylimidazolium nitrate, 1-ethyl-3-methylimidazolium hexafluorophosphate, 1-ethyl-3-methylimidazolium chloride, 1-ethyl-3-methylimidazolium nitrate, 1-ethyl-3-methylimidazolium hexafluorophosphate, 1-ethyl-3-methylimidazolium tetrafluoroborate, 1-ethyl-3-methylimidazolium tosylate, 1-ethyl-3-methylimidazolium trifluoromethanesulfonate, 1-n-butyl-3-methylimidazolium trifluoromethanesulfonate, 1-butyl-3-methylimidazolium bis(trifluoromethylsulfonyl)imide, 1-butyl-3-methylimidazolium bromide, 1-butyl-3-methylimidazolium chloride, 1-butyl-3-methylimidazolium hexafluorophosphate, 1-butyl-3-methylimidazolium 2-(2-methoxyethoxy)ethylsulfate, 1-butyl-3-methylimidazolium methylsulfate, 1-butyl-3-methylimidazolium tetrafluoroborate, 1-hexyl-3-methylimidazolium chloride, 1-hexyl-3-methylimidazolium hexafluorophosphate, 1-hexyl-3-methylimidazolium tetrafluoroborate, 1-methyl-3-octylimidazolium chloride, 1-methyl-3-octylimidazolium tetrafluoroborate, 1,2-dimethyl-3-propyloctylimidazolium tris(trifluoromethylsulfonyl)methide, 1-butyl-2,3-dimethylimidazolium chloride, 1-butyl-2,3-dimethylimidazolium hexafluorophosphate, 1-butyl-2,3-dimethylimidazolium tetrafluoroborate, 1-methyl-3-(3,3,4,4,5,5,6,6,7,7,8,8,8-tridecafluorooctyl)imidazolium hexafluorophosphate, and 1-butyl-3-(3,3,4,4,5,5,6,6,7,7,8,8,8-tridecafluorooctyl)imidazolium hexafluorophosphate.

Examples of the ionic liquid that is a pyridinium salt include 3-methyl-1-propylpyridinium bis(trifluoromethylsulfonyl)imide, -butyl-3-methylpyridinium bis(trifluoromethylsulfonyl)imide, 1-propyl-3-methylpyridinium trifluoromethanesulfonate, 1-butyl-3-methylpyridinium trifluoromethanesulfonate, 1-butyl-4-methylpyridinium bromide, 1-butyl-4-methylpyridinium chloride, 1-butyl-4-methylpyridinium hexafluorophosphate, and 1-butyl-4-methylpyridinium tetrafluoroborate.

Examples of the ionic liquid that is an ammonium salt include tetrabutylammonium heptadecafluorooctane sulfonate, tetrabutylammonium nonafluorobutane sulfonate, tetrapentylammonium methanesulfonate, tetrapentylammonium thiocyanate, and methyl-tri-n-butylammonium methylsulfate.

Examples of the ionic liquid that is a phosphonium salt include tetrabutylphosphonium methanesulfonate, tetrabutylphosphonium p-toluenesulfonate, trihexyltetradecylphosphonium bis(trifluoroethylsulfonyl) imide, trihexyltetradecylphosphonium bis(2,4,4-trimethylpentyl)phosphinate, trihexyltetradecylphosphonium bromide, trihexyltetradecylphosphonium chloride, trihexyltetradecylphosphonium decanoate, trihexyltetradecylphosphonium hexafluorophosphinate, triethyltetradecylphosphonium tetrafluoroborate, and tributylmethylphosphonium tosylate. These can be used alone or in combination of two or more but are not necessarily limited thereto.

As the ionic liquid, a commercially available product can be used as it is, and examples thereof include 3M (trademark) ionic liquid antistatic agent FC-4400 (manufactured by 3M Japan Ltd.), CIL-313, CIL-312 (both manufactured by Japan Carlit Co., Ltd.), IL-A2, IL-A5, IL-A12, IL-AP1, IL-AP3, IL-C1, IL-C3, IL-C5, IL-C6, IL-IM1, IL-IM4, IL-MA1, IL-MA2, IL-MA3, IL-P14, IL-P18, and IL-OH9 (all manufactured by KOEI CHEMICAL CO., LTD.).

The content of the component (C) is preferably 0.1 to 10 parts by mass, more preferably 0.5 to 5 parts by mass, still more preferably 1 to 3 parts by mass, with respect to 100 parts by mass of the component (A), from the viewpoint of heat resistance and mechanical properties. When the content of the component (C) is 0.1 parts by mass or more, the component (B) can be more efficiently dispersed. In addition, when the content of the component (C) is 10 parts by mass or less, the cured epoxy resin obtained by curing the epoxy resin composition is likely to have higher heat resistance.

From the viewpoint of easily maintaining the mechanical properties of the fiber-reinforced composite material of the present application, the total content of (A) to (C) in the entire epoxy resin composition is preferably 30 to 95 mass%, more preferably 50 to 85 mass%, still more preferably 60 to 80 mass%. When the total content of (A) to (C) is 30 mass% or more, the mechanical properties are further improved. When the content is 95 mass% or less, a sufficient effect of improving the bending strength is more likely to be obtained.

From the viewpoint of efficiently dispersing the component (B) in the component (A), the component (C) is compatible when mixed with the component (A). When 2 parts by mass of the component (C) is mixed with 100 parts by mass of the component (A) at room temperature, that is, at 25°C, and the area ratio of the phase formed by the component (C) to the area of the entire observed image of the mixture is 0 to 1.5%, the mixture is in a compatible state. The area ratio of the phase formed by the component (C) is preferably 0 to 1%, and more preferably 0 to 0.7%. By setting the area ratio of the phase formed by the component (C) to 1.5% or less, the component (C) can be uniformly present in the component (A), and the dispersion effect can be efficiently exhibited. In the present invention, the compatibility of the component (C) with the component (A) is evaluated by the method described later.

The epoxy resin composition of the present invention has a viscosity of 0.1 to 100 Pa·s at 25°C. The upper limit of the viscosity is preferably 50 Pa·s, more preferably 25 Pa·s, still more preferably 20 Pa·s. By setting the viscosity at 25°C to 0.1 Pa·s or more, the viscosity at the time of impregnation of the epoxy resin composition does not become too low, and the epoxy resin composition does not flow to the outside, and the reinforcing fibers are easily impregnated uniformly. When the viscosity at 25°C is 100 Pa·s or less, it is possible to suppress a decrease in the impregnating property and to suppress formation of voids when a carbon fiber reinforced material is formed. The viscosity is determined by subjecting the epoxy resin composition, which is obtained after mixing the components and stirring the components for one minute, to the measurement. In the present invention, the viscosity of the epoxy resin composition is measured by the method described later. Examples of means for satisfying the above viscosity range include reducing the content of the solid component in the epoxy resin composition and using a component (A) having a lower viscosity.

The dispersity of the component (B) in the component (A) is 0.1 to 0.8, preferably 0.1 to 0.7, more preferably 0.1 to 0.5. By setting the dispersity of the component (B) to 0.1 or more, the effect of the component (B) can be efficiently exhibited. When the dispersity of the component (B) is 0.8 or less, the component (B) can be uniformly dispersed, so that a molding material for a fiber-reinforced composite material having an improved impregnating property into a reinforcing fiber, less unevenness in physical properties after curing, and good appearance quality can be obtained. In the present invention, the dispersity of the component (B) is measured by the method described later. As means for setting the dispersity of the component (B) in the component (A) within the above range, for example, it is possible to use a solid curing agent having a lower surface tension as the component (B).

The epoxy resin composition of the present invention preferably contains a large amount of non-volatile components from the viewpoint of suppressing generation of gas. Specifically, the content is preferably 95 mass% or more, particularly preferably 97 mass% or more, more preferably 98 mass% or more, particularly most preferably 98.5 mass% or more. The upper limit is about 100 mass%.

The term "non-volatile component" as used herein refers to a remaining amount ratio when suction drying is performed at 25°C and a gauge pressure of -0.1 MPa for 24 hours. Here, the gauge pressure indicates a pressure when the atmospheric pressure is set to zero, and the lower the gauge pressure, the higher the degree of vacuum and the higher the ability to remove volatile components.

The heat resistance of the fiber-reinforced composite material containing the epoxy resin composition of the present invention depends on the glass transition temperature (Tg) of the cured epoxy resin obtained by curing the epoxy resin composition. In order to obtain a fiber-reinforced composite material having high heat resistance, the glass transition temperature of the cured epoxy resin at a degree of cure in the range of 85 to 95% (such as 90%) is 110°C or higher. Examples of means for setting the glass transition temperature to the above range include increasing the glass transition temperature by incorporating a larger amount of a rigid molecular structure such as an aromatic structure in the epoxy resin composition. Examples of the curing conditions of the epoxy resin composition include heating at a temperature of 180°C for 3 hours. In the present invention, the degree of cure of the cured epoxy resin is determined by the method described later.

The upper limit of the glass transition temperature is not particularly limited but is preferably 250°C or lower. It is more preferable that the glass transition temperature be 120°C or higher and 220°C or lower. When the glass transition temperature is 110°C or higher, high heat resistance is likely to be imparted to the cured epoxy resin obtained by curing the epoxy resin composition. When the glass transition temperature is 250°C or lower, a three-dimensional crosslinked structure of the cured epoxy resin obtained by curing the epoxy resin composition will not have too high a cross-linking density, and high mechanical properties are likely to be exhibited. Herein, the glass transition temperature of the cured epoxy resin obtained by curing the epoxy resin composition is determined by measurement using a dynamic viscoelasticity analyzer (DMA). Specifically, DMA measurement is performed at elevated temperature using a rectangular test piece cut out from a cured resin plate, and the temperature at the inflection point of the obtained storage modulus G' is defined as Tg. The measurement conditions are as described in Examples.

The molding material for a fiber-reinforced composite material of the present invention is a molding material for a fiber-reinforced composite material including a thickened resin and a reinforcing fiber, in which the thickened resin is obtained by bringing the epoxy resin composition of the present invention into a semi-cured condition. The definition and the like of the thickened resin are as described later.

In the molding material for a fiber-reinforced composite material of the present invention, the dispersity of the component (B) in the thickened resin is preferably 0.1 to 1.0, more preferably 0.1 to 0.9, still more preferably 0.1 to 0.8, most preferably 0.1 to 0.7. By setting the dispersity of the component (B) to 0.1 or more, the effect of the component (B) as a curing agent can be efficiently exhibited. When the dispersity of the component (B) is 1.0 or less, a molding material for a fiber-reinforced composite material having less unevenness in physical properties after curing and good appearance quality can be obtained. In the present invention, the dispersity of the component (B) is measured by the method described later. Examples of means for achieving the dispersity of the component (B) in the thickened resin in the molding material for a fiber-reinforced composite material include use of the epoxy resin composition of the present invention, and particularly, in the epoxy resin composition before impregnation into a reinforcing fiber, setting the dispersity of the component (B) in the component (A) within the above range.

The molding material for a fiber-reinforced composite material of the present invention is excellent in dispersibility of a solid curing agent in the epoxy resin composition and the impregnating property into a reinforcing fiber and is thus excellent in providing a fiber-reinforced composite material having less unevenness in physical properties after curing and excellent mechanical properties. The unevenness in physical properties of the fiber-reinforced composite material of the present invention preferably has a variation in bending strength (CV value) of 15% or less, more preferably 10% or less.

Here, the CV value of the bending strength is a value obtained by calculating a mean value of the bending strength from ten arbitrarily selected test pieces, dividing a difference between the mean value and the bending strength of each test piece by the mean value, converting the result into a percentage, and averaging the result.

In the molding material for a fiber-reinforced composite material of the present invention, the type and length of the reinforcing fiber, the content ratio between the reinforcing fiber and the resin, and the like are not particularly limited, and examples of the reinforcing fiber include a glass fiber, a carbon fiber, a graphite fiber, an aramid fiber, a boron fiber, an alumina fiber, and a silicon carbide fiber. Two or more kinds of these reinforcing fibers may be mixed and used. The carbon fiber and the graphite fiber are preferably used in order to obtain a molded article having lighter weight and higher durability. In particular, in applications where there is a high demand for weight reduction and realization of high strength of the material, it is preferable that the reinforcing fiber be a carbon fiber because of its excellent specific elastic modulus and specific strength. As the carbon fiber, any type of carbon fiber can be used depending on the application. However, from the viewpoint of impact resistance, a carbon fiber having a tensile modulus of a maximum of 400 GPa is preferable. From the viewpoint of strength, a carbon fiber having a tensile strength of preferably 4.4 to 6.5 GPa is used because such a carbon fiber can provide a composite material having high stiffness and mechanical strength. The carbon fiber is preferably a high-strength high-elongation carbon fiber having a tensile elongation of 1.7 to 2.3% because the tensile elongation of the fiber is also an important factor. Accordingly, the carbon fiber is most preferably a fiber having all of a tensile modulus of 230 GPa or more, a tensile strength of 4.4 GPa or more, and a tensile elongation of 1.7% or more.

Examples of commercially available products of the carbon fiber include "torayca (registered trademark)" T800G-24K, "torayca (registered trademark)" T800S-24K, "torayca (registered trademark)" T700G-24K, "torayca (registered trademark)" T300-3K, and "torayca (registered trademark)" T700S-12K (all manufactured by TORAY INDUSTRIES, INC.).

As the reinforcing fiber in the present invention, either a continuous fiber or a discontinuous fiber can be used.

When the reinforcing fiber is a continuous fiber, examples of the form of the reinforcing fiber include fiber structures such as long fibers in which filaments are arranged in one direction, tows, woven fabrics, mats, knits, and braids. When the reinforcing fiber is a continuous fiber, a reinforcing fiber having an average fiber diameter in the range of 3 μm or more and 12 μm or less and a mass fraction of the reinforcing fiber in the range of 40% or more and 90% or less is preferably used. When the mass fraction of the reinforcing fiber is 40% or more, the mass of the resulting fiber-reinforced composite material does not become excessive, and the advantages of the fiber-reinforced composite material excellent in specific strength and specific elastic modulus can be sufficiently exhibited. When the mass fraction of the reinforcing fiber is 90% or less, the epoxy resin composition is excellent in the impregnating property into the reinforcing fiber. Examples of the fiber-reinforced composite material obtained by using such a continuous fiber include prepregs and tow prepregs.

When the reinforcing fiber is a discontinuous fiber, a reinforcing fiber having a fiber length in the range of 5 mm or more and 100 mm or less, an average fiber diameter in the range of 3 μm or more and 12 μm or less, and a mass fraction of the reinforcing fiber in the range of 40% or more and 90% or less is preferably used. When the mass fraction of the reinforcing fiber is 40% or more, the mass of the resulting fiber-reinforced composite material does not become excessive, and the advantages of the fiber-reinforced composite material excellent in specific strength and specific elastic modulus can be sufficiently exhibited. When the mass fraction of the reinforcing fiber is 90% or less, the epoxy resin composition is excellent in the impregnating property into the reinforcing fiber. Examples of the molding material for a fiber-reinforced composite material obtained by using such a discontinuous fiber include BMCs and SMCs. Among them, SMCs are particularly preferably used from the viewpoint of producibility and the flexibility in a shape of the molding.

The form of a bundle assembly of such a discontinuous fiber is not particularly limited, and a known technique can be applied. As for the bundle assembly, it is preferable that in a plane of the bundle assembly in which the width of the bundle assembly in the direction perpendicular to the filament arrangement direction of the reinforcing fiber is the largest, angles a and b, which are the degrees of acute angles made by the sides formed by arrayed both ends of the reinforcing fiber filaments in the bundle assembly, are each 2° or more and 30° or less. The smaller the angles a and b, which are the degrees of angles made by the sides formed by arrayed both ends of the reinforcing fiber filaments in the bundle assembly to the arrangement direction of the reinforcing fiber filaments, are, the higher the homogeneity of the bundle assembly and the resin in the SMC is. Therefore, a great effect of improving the surface quality and strength is exerted on a fiber-reinforced composite material formed using the SMC. The effect is remarkable when the angles a and b are each 30° or less. Meanwhile, the smaller the angles a and b are, the lower the handleability of the bundle assembly itself is. Further, the smaller the angle between the arrangement direction of the reinforcing fiber filaments and the cutting blade is, the lower the stability in the cutting step is. Therefore, the angles a and b are preferably each 2° or more. It is more preferable that the angles a and b be each 3° or more and 25° or less. It is still more preferable that the angles a and b be each 5° or more and 15° or less in view of the balance between the effect of improving the surface quality and strength of the fiber-reinforced composite material and the processability in the production process of the bundle assembly.

Examples of means for cutting the continuous reinforcing fiber bundle for producing a bundle assembly of discontinuous fiber filaments include rotary cutters such as a guillotine cutter and a roving cutter. The continuous reinforcing fiber bundle is inserted into the cutting means and cut in a state where the longitudinal direction of the continuous reinforcing fiber bundle and the direction of the cutting blade equipped in the cutting means are relatively oblique.

The method for producing the molding material for a fiber-reinforced composite material of the present invention is not particularly limited. For example, the molding material for a fiber-reinforced composite material of the present invention may be obtained by the following method. Specifically, the epoxy resin composition of the present invention is impregnated into a reinforcing fiber by a known method suitable for the form of the reinforcing fiber in the presence of a component (D), which is a compound that undergoes a thickening reaction with an epoxy resin (hereinafter may be simply referred to as the component (D)), and then the resulting product is held at a temperature of about room temperature to about 80°C for several hours to several days to bring the epoxy resin composition into a semi-cured condition where the increase in viscosity of the epoxy resin composition is saturated. Herein, the epoxy resin composition brought into a semi-cured condition where the increase in viscosity of the epoxy resin composition is saturated is referred to as the thickened resin. The expression "undergoes a thickening reaction" means that the epoxy resin composition is brought into a semi-cured condition. In the present invention, thickening conditions in which the epoxy resin composition is held at 40°C for 24 hours to saturate the increase in viscosity of the resin composition and bring the resin composition into a semi-cured condition is employed. The component (D) is not particularly limited as long as it is a component that thickens the epoxy resin composition by covalent bonding with the epoxy resin, but is preferably an aliphatic amine, an acid anhydride, an isocyanate compound, or a derivative thereof.

The aliphatic amine is an amine having no aromatic ring and is not particularly limited as long as it has one or more amino groups in the molecule, and specific examples thereof include polyalkylene polyamines, isophoronediamine, 3,3'-dimethylenedi(cyclohexylamine), 4,4'-diaminodicyclohexylmethane, 3,3'-dimethyl-4,4'-diaminodicyclohexylmethane, 3,3'-diethyl-4,4'-diaminodicyclohexylmethane, n-aminoethylpiperazine, norbornanediamine, diethyleneglycol diaminopropyl ether, dihydrazide adipate, hydrazine, cyanamide, and derivatives thereof. The amino group is preferably bonded to a primary, secondary, or tertiary carbon atom and more preferably bonded to a primary or secondary carbon atom in order to easily thicken the epoxy resin composition.

An "acid anhydride" is a compound having one or more acid anhydride groups in the molecule. Examples of the acid anhydride include methyltetrahydrophthalic anhydride, hexahydrophthalic anhydride, methylhexahydrophthalic anhydride, tetrahydrophthalic anhydride, methylnadic anhydride, maleic anhydride, and succinic anhydride.

The isocyanate compound is not particularly limited as long as it has, in a molecule, one or more isocyanate groups on average, and examples thereof include aliphatic isocyanates and aromatic isocyanates. Examples of the aliphatic isocyanate include ethylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanate hexane, cyclopentene-1,3-diisocyanate, isophorone diisocyanate, 1,2,3,4-tetraisocyanate butane, and butane-1,2,3-triisocyanate. Examples of the aromatic isocyanate include p-phenylene diisocyanate, 1-methylphenylene-2,4-diisocyanate, naphthalene-1,4-diisocyanate, tolylene diisocyanate, diphenyl-4,4-diisocyanate, benzene-1,2,4-triisocyanate, xylylene diisocyanate, diphenylmethane diisocyanate (MDI), diphenylpropane diisocyanate, tetramethylene xylene diisocyanate, polymethylene polyphenyl polyisocyanate, and those having a structure in which the above-mentioned aromatic isocyanates are linked with a methylene group or the like.

In the present invention, the viscosity at 25°C of the component (D) is preferably 1 mPa·s or more and 10,000 mPa·s or less, more preferably 10 mPa·s or more and 10,000 mPa·s or less. When the viscosity of the component (D) is within the above range, the viscosity of the epoxy resin composition is easily reduced sufficiently.

The fiber-reinforced composite material of the present invention is a molded product of the molding material for a fiber-reinforced composite material of the present invention.

The method for producing a fiber-reinforced composite material of the present invention is not particularly limited, but a hand lay-up method, a filament winding method, a pultrusion method, a resin transfer molding (RTM) method, an autoclave molding method of a prepreg, and further, press forming methods of molding materials for a fiber-reinforced composite material, such as prepregs and tow prepregs, bulk molding compounds (BMCs), and sheet molding compounds (SMCs), are preferably used.

In the case of the fiber-reinforced composite material, particularly a fiber-reinforced composite material used in the field of automobiles, mechanical properties such as high heat resistance and bending strength are required. The fiber-reinforced composite material of the present invention is preferably used also in the field of automobiles since the fiber-reinforced composite material is excellent in heat resistance and mechanical properties. Further, the molding material for a fiber-reinforced composite material of the present invention provides a fiber-reinforced composite material in which the fiber and the resin have very high homogeneity, because the resin does not singly flow first during press forming, and the molding material exhibits excellent flowability regardless of the molding temperature.

EXAMPLES

Hereinafter, the epoxy resin composition, the molding material for a fiber-reinforced composite material, and the fiber-reinforced composite material of the present invention will be described in more detail with reference to examples, but the present invention is not limited thereto.

<Resin raw materials>

The following resin raw materials were used to obtain the epoxy resin compositions of the examples and comparative examples. The numerical value of each component in the column of "Epoxy resin composition" in the tables indicates the content, and the unit ("parts") is "parts by mass" unless otherwise specified.

1. Component (A): epoxy resin having two or more epoxy groups in one molecule

- "jER (registered trademark)" 828 (manufactured by Mitsubishi Chemical Corporation): liquid bisphenol A type epoxy resin.
- "jER (registered trademark)" 154 (manufactured by Mitsubishi Chemical Corporation): phenol novolac type solid epoxy resin.
- "Epotohto (registered trademark)" YD-128S (manufactured by NIPPON STEEL Chemical & Material Co., Ltd.)
- "DENACOL (registered trademark)" EX-411 (manufactured by Nagase ChemteX Corporation).
- "Denacol (registered trademark)" EX-614 (manufactured by Nagase ChemteX Corporation): sorbitol polyglycidyl ether.

2. Component (B): solid curing agent

- "jERcure (registered trademark)" DICY7 (mean particle diameter: 3 $\mu$m) (manufactured by Mitsubishi Chemical Corporation): dicyandiamide.
- "jERcure (registered trademark)" DICY50 (mean particle diameter: 45 $\mu$m) (manufactured by Mitsubishi Chemical Corporation)
- "DYHARD (registered trademark)" 100SF (mean particle diameter: 1.5 $\mu$m) (manufactured by AlzChem Trostberg GmbH)
- "Amicure (registered trademark)" Cg-325G (mean particle diameter: 15 $\mu$m) (manufactured by Evonik Industries AG).

3. Component (C): dispersant compatible with component (A)

- "3M (registered trademark)" ionic liquid antistatic agent FC4400 (manufactured by 3M Japan Ltd.)
- "NISSANCATION (registered trademark)" $M_2$-100R (manufactured by NOF CORPORATION)
- CIL-312 (manufactured by Japan Carlit Co., Ltd.)
- LIPOQUAD 2HP Flake (manufactured by Lion Corporation)
- LIPON LS-250 (manufactured by Lion Corporation)
- IL-A2 (manufactured by KOEI CHEMICAL CO., LTD.)
- IL-OH9 (manufactured by KOEI CHEMICAL CO., LTD.)
- Ammonium stearate (manufactured by NACALAI TESQUE, INC.)
  Ammonium salt not corresponding to component (C)
- Ammonium benzoate (manufactured by Tomiyama Pure Chemical Industries, Ltd.).

4. Component (D): compound that undergoes thickening reaction with epoxy resin

- 1,4-Butanediamine (manufactured by Tokyo Chemical Industry Co., Ltd.)
- "Lupranate (registered trademark)" M20S (manufactured by BASF INOAC Polyurethanes Ltd.): Polymeric MDI (polymethylene polyphenyl polyisocyanate).

<Evaluation of compatibility of component (C) with component (A)>

A mixture of the component (A) and the component (C) was prepared by mixing 2 parts by mass of the component (C) with 100 parts by mass of the component (A) at room temperature (25°C), 0.5 mg of the mixture of the component (A) and the component (C) was applied to a cover glass placed on a slide glass, the cover glass was put on, and the epoxy resin composition was extended by pressing the epoxy resin composition across the cover glass and observed using an optical microscope "OPTIPHOT" manufactured by Nikon Corporation and a camera "AxioCam MRc" manufactured by Carl Zeiss AG to acquire a dispersed image. Particles of the component (C) were extracted from the obtained dispersed image with image processing software "Image Pro Premier 3D" manufactured by Media Cybernetics, Inc., and the area of the phase formed by the component (C)/the area of the entire observed image $\times$ 100 was calculated.

<Preparation of epoxy resin composition>

Epoxy resin compositions were prepared by mixing the components with the contents shown in Tables 1-1, 1-2, and 2.

<Preparation of epoxy resin composition for molding material for fiber-reinforced composite material (SMC)>

Epoxy resin compositions were prepared by mixing the components with the contents shown in Table 3.

<Measurement of viscosity of epoxy resin compositions immediately after preparation>

The complex viscosity of the epoxy resin composition prepared in <Preparation of epoxy resin composition> and <Preparation of epoxy resin composition for molding material for fiber-reinforced composite material (SMC)> was measured at a gap of 1 mm, a vibration mode, a swing angle $\varphi$ = 0.0025 rad, a frequency of 1 Hz, and 25°C using a rheometer "Physica MCR 501" manufactured by Anton Paar GmbH and using a parallel plate of 25 $\varphi$.

<Measurement of dispersity of component (B) in component (A)>

To a cover glass placed on a slide glass, 0.5 mg of the epoxy resin composition prepared in <Preparation of epoxy resin composition> and <Preparation of epoxy resin composition for molding material for fiber-reinforced composite material (SMC)> was applied, the cover glass was put on, and the epoxy resin composition was extended by pressing the epoxy resin composition across the cover glass and observed at an observation magnification of 200 times using an optical microscope "OPTIPHOT" manufactured by Nikon Corporation and a camera "AxioCam MRc" manufactured by Carl Zeiss AG to acquire a dispersed image. Particles of the component (B) were extracted from the obtained dispersed image using image processing software "Image Pro Premier 3D" manufactured by Media Cybernetics Inc., an average area of regions obtained by Voronoi tessellation of the particles of the component (B) and its standard deviation were calculated, and a value obtained by dividing the standard deviation by the average area was defined as the dispersity.

<Evaluation of impregnating property>

From the nozzle of a 1-mL syringe "SS-01T" manufactured by Terumo Corporation, 2 mg of a carbon fiber having a length of 3 mm and an average fiber diameter of 7 $\mu$m was inserted and pushed to the mark of 0.1 mL with a plunger, and the plunger was removed. Then, 0.6 mL of the epoxy resin composition prepared in <Preparation of epoxy resin composition> and <Preparation of epoxy resin composition for molding material for fiber-reinforced composite material (SMC)> was dropped from the nozzle, and the time from when the resin reached the mark of 0.1 mL to when the resin reached the tip of the syringe was measured.

<Production of cured epoxy resin>

Each epoxy resin composition prepared in <Preparation of epoxy resin composition> and <Preparation of epoxy resin composition for molding material for fiber-reinforced composite material (SMC)> was defoamed in a vacuum and then injected into a mold set to a thickness of 2 mm with a 2-mm thick "TEFLON (registered trademark)" spacer. Curing was performed at a temperature of 180°C for 3 hours to provide a cured epoxy resin with a thickness of 2 mm.

<Measurement of degree of cure>

On 5 mg of the cured epoxy resin obtained in <Production of cured epoxy resin> collected, measurement was performed using a differential scanning calorimeter (DSC 2910: manufactured by TA Instruments) while raising the temperature from 30°C to 350°C at a temperature ramp rate of 10°C/min to obtain an exothermic curve, and the exothermic reaction peak was integrated to calculate the total heat value QT of the thermosetting resin and the residual heat value QR of the cured epoxy resin. When an exothermic or endothermic reaction peak due to a decomposition reaction or the like was observed, the measurement was performed in a temperature range equal to or lower than the peak.
Here, the degree of cure (%) obtained by DSC was determined by the following formula:

$$\text{degree of cure (\%)} = (QT - QR)/QT \times 100.$$

<Measurement of glass transition temperature Tg of cured epoxy resin>

From each cured epoxy resin obtained in <Production of cured epoxy resin> having a degree of cure measured in <Measurement of degree of cure>, a test piece having a width of 12.7 mm and a length of 40 mm was cut out, and the test piece was subjected to Tg measurement using a DMA (ARES manufactured by TA Instruments). A measurement condition was a temperature ramp rate of 5°C/min. The temperature at the inflection point of the storage modulus G' obtained in the measurement was defined as Tg.

<Production of SMC>

"Torayca (registered trademark)" T700S-12K (manufactured by Toray Industries, Inc.) was used as a carbon fiber. The continuous carbon fiber strands were cut at a desired angle, and the bundle assemblies of the carbon fiber were scattered so as to be uniformly dispersed to produce a discontinuous carbon fiber nonwoven fabric having an isotropic fiber orientation. A rotary cutter was used as a cutting device. A distance between blades was 30 mm. A basis weight of the discontinuous carbon fiber nonwoven fabric was 1 kg/m$^2$. The discontinuous carbon fiber nonwoven fabric was sandwiched between polyethylene films coated with the epoxy resin composition obtained in <Preparation of epoxy resin composition for molding material for fiber-reinforced composite material (SMC)> so that the weight content of the carbon fiber of SMC to be obtained was 40%, and pressed with a roller to be impregnated with the epoxy resin composition, thereby obtaining a sheet-like SMC precursor. The SMC precursor was held at 40°C for 24 hours to thicken the resin, thereby obtaining SMC.

<Measurement of dispersity of component (B) in thickened resin of molding material for fiber-reinforced composite material>

The epoxy resin composition portion on the surface of SMC obtained in <Production of SMC> above was observed with a digital microscope VHX-7000 (manufactured by KEYENCE CORPORATION) at a magnification of 1,000 times, the particles of the component (B) were extracted from the obtained image with image analysis software Image Pro Premier 3D (manufactured by Media Cybernetics Inc.), the average area of regions obtained by Voronoi tessellation of the particles of the component (B) and the standard deviation thereof were calculated, and the value obtained by dividing the standard deviation by the average area is taken as the dispersity.

<Evaluation of SMC impregnating property>

The SMC obtained in <Production of SMC> was torn into two sheets by holding a front surface and a back surface, and the case where the resin was impregnated up to the center in the thickness direction was rated as a good impregnating property, and the case where the resin was not impregnated was rated as a poor impregnating property.

<Evaluation of appearance quality of fiber-reinforced composite material>

Using the above SMC, the SMC was cured under a pressure of 10 MPa with a pressure press under conditions of 150°C for 30 minutes to obtain a flat fiber-reinforced composite material having a size of $300 \times 400$ mm and a thickness of 1.6 mm. The surface of the obtained fiber-reinforced composite material was equally divided into 9 portions, and the glossiness of each portion was measured at an incident angle of 60° using a digital variable angle gloss meter UGV-5D (manufactured by Suga Test Instruments Co., Ltd.). An average value of each point was calculated, a value obtained by dividing a difference between the average value and the glossiness of each point by the average value was expressed as a percentage, and a CV value was calculated from the averaged value. A sample having a CV value of less than 5% was rated as good, and a sample having a CV value of 5% or more was rated as poor.

<Measurement of bending strength of fiber-reinforced composite material using SMC>

From the flat fiber-reinforced composite material obtained as described above, 5 pieces (10 pieces in total) of test pieces each having a size of $100 \times 25 \times 1.6$ mm were cut out at 0 degrees (the longitudinal direction of the flat plate being 0 degrees) and 90 degrees, and measurement was performed in accordance with JIS K 7074 (1988).

(Examples 1 to 8)

Resin compositions were prepared according to the method for preparing a resin composition described above with contents described in Table 1-1 while changing the type of the component (C), and the viscosity, the dispersity, and the impregnating property of the epoxy resin composition immediately after preparation were measured. In addition, cured epoxy resins of the respective epoxy resin compositions were prepared. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 1 in which the component (C) was not added, and it was confirmed that the impregnating property was improved.

(Examples 11 to 16)

The same procedure was performed as in Example 1 except that the types and contents of the component (B) and the component (C) were changed. The viscosity, dispersity, and impregnating property of the epoxy resin composition immediately after preparation were measured. In addition, cured epoxy resins of the respective epoxy resin compositions were prepared. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 1 in which the component (C) was not added, and it was confirmed that the impregnating property was improved.

(Comparative Example 1)

A resin composition was prepared according to the method for preparing a resin composition described above with contents of the component (A) and the component (B) described in Table 2, and the viscosity and the impregnating property of the epoxy resin composition immediately after preparation were measured. In addition, cured epoxy resins of the respective epoxy resin compositions were prepared. The viscosity of the epoxy resin composition immediately after preparation at 25°C was in the range of 0.1 to 100 Pa·s. In addition, the dispersity of the component (B) in the component (A) was 1.0, and the impregnation time was 680 seconds, which indicated that the impregnating property was poor.

(Example 9)

The same procedure was performed as in Example 1 except that the content of the component (B) was changed. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 3 in which the component (C) was not added, and it was confirmed that the impregnating property was improved.

(Example 10)

The same procedure was performed as in Example 9 except that the type and content of the component (A) were changed. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 3 in which the component (C) was not added, and it was confirmed that the impregnating property was improved.

(Comparative Example 3)

The same procedure was performed as in Example 9 except that the component (C) was excluded. The viscosity of the epoxy resin composition immediately after preparation at 25°C was in the range of 0.1 to 100 Pa·s. In addition, the dispersity of the component (B) in the component (A) was 1.0, and the impregnation time was 564 seconds, which indicated that the impregnating property was inferior to those of Examples 9 and 10.

(Example 17)

The same procedure was performed as in Example 1 except that the content of the component (B) was changed. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 5 in which the component (C) was not added, and it was confirmed that the impregnating property was improved.

(Comparative Example 5)

The same procedure was performed as in Example 17 except that the component (C) was excluded. The viscosity of the epoxy resin composition immediately after preparation at 25°C was in the range of 0.1 to 100 Pa·s. In addition, the dispersity of the component (B) in the component (A) was 1.3, and the impregnation time was 823 seconds, which indicated that the impregnating property was inferior to that of Example 17.

(Comparative Example 2)

The same procedure was performed as in Example 1 except that the type of the component (C) was changed. The viscosity of the epoxy resin composition immediately after preparation at 25°C was in the range of 0.1 to 100. In addition, the dispersity of the component (B) in the component (A) was 1.2, and the impregnation time was 1,070 seconds, which indicated that the impregnating property was poor.

(Comparative Example 4)

The same procedure was performed as in Example 1 except that the type of the component (A) and the content of the component (B) were changed. The viscosity of the epoxy resin composition immediately after preparation at 25°C was higher than 100 Pa·s. In addition, the dispersity of the component (B) in the component (A) was 0.8, and the impregnation time was 2,951 seconds, which indicated that the impregnating property was poor.

(Comparative Example 6)

The same procedure was performed as in Example 1 except that the content of the component (B) was changed. The viscosity of the epoxy resin composition immediately after preparation at 25°C was higher than 100 Pa·s. In addition, the dispersity of the component (B) in the component (A) was 1.4, and the impregnation time was 4,100 seconds, which indicated that the impregnating property was poor.

(Comparative Example 7)

The same procedure was performed as in Example 1 except that the content of the component (C) was changed. The viscosity of the epoxy resin composition immediately after preparation at 25°C was in the range of 0.1 to 100 Pa·s. In addition, the dispersity of the component (B) in the component (A) was 1.2, and the impregnation time was 930 seconds, which indicated that the impregnating property was poor.

(Examples 18 and 19)

Epoxy resin compositions were prepared according to the method for preparing an epoxy resin composition for SMC described above with contents described in Table 3 while changing the type of the component (C), and the viscosity, the dispersity, and the impregnating property of the epoxy resin composition immediately after preparation were measured. In addition, cured epoxy resins of the respective epoxy resin compositions were prepared. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Example 8 in which the component (C) was not added, and it was confirmed that the impregnating property was improved. In addition, SMC of each composition was prepared, and the dispersity of the component (B) in the thickened resin and the SMC impregnating property of the molding material for a fiber-reinforced composite material were evaluated. The dispersity was within the range of 0.1 to 1.0, and the SMC impregnating property and appearance quality were good.

(Comparative Example 8)

The same procedure was performed as in Examples 18 and 19 except that the component (C) was excluded. The viscosity of the epoxy resin composition immediately after preparation at 25°C was in the range of 0.1 to 100 Pa·s. In addition, the dispersity of the component (B) in the component (A) was 1.1, and the impregnation time was 421 seconds, which indicated that the impregnating property was inferior to those of Examples 9 and 10. The dispersity of the component (B) in the thickened resin of the molding material for a fiber-reinforced composite material was 1.1, and the SMC impregnating property and appearance quality were poor.

(Example 20)

The same procedure was performed as in Examples 18 and 19 except that the types and contents of the components (A) to (D) were changed. The viscosity of the epoxy resin composition immediately after preparation at 25°C was in the range of 0.1 to 100 Pa·s. The dispersity of the component (B) in the component (A) was within the range of 0.1 to 0.8. The impregnation time was shorter than that in Comparative Examples 9 and 10 in which the component (C) was not added, and it was confirmed that the impregnating property was improved. In addition, SMC of each composition was prepared, and the dispersity of the component (B) in the thickened resin of the molding material for a fiber-reinforced composite material was measured. The dispersity was within the range of 0.1 to 1.0, and the SMC impregnating property and appearance quality were good.

(Comparative Example 9)

The same procedure was performed as in Example 20 except that the component (C) was excluded. The viscosity of the epoxy resin composition immediately after preparation at 25°C was in the range of 0.1 to 100 Pa·s. In addition, the dispersity of the component (B) in the component (A) was 1.2, and the impregnation time was 540 seconds, which indicated that the impregnating property was inferior to that of Example 20. The dispersity of the component (B) in the thickened resin of the molding material for a fiber-reinforced composite material was 1.3, and the SMC impregnating property and appearance quality were poor.

(Comparative Example 10)

The same procedure was performed as in Example 20 except that the type of the component (C) was changed. The viscosity of the epoxy resin composition immediately after preparation at 25°C was in the range of 0.1 to 100 Pa·s. In addition, the dispersity of the component (B) in the component (A) was 1.3, and the impregnation time was 793 seconds, which indicated that the impregnating property was inferior to that of Example 20. The dispersity of the component (B) in the thickened resin of the molding material for a fiber-reinforced composite material was 1.5, and the SMC impregnating property and appearance quality were poor.

[Table 1-1-1]

| Composition | | | Viscosity at 25°C [Pa·s] | Area ratio of component (C) in component (A) [%] | Example 1 | Example 2 | Example 3 | Example 4 | Example 5 |
|---|---|---|---|---|---|---|---|---|---|
| Composition | Component (A) | jER828 | - | - | 100 | 100 | 100 | 100 | 100 |
| | | EX-411 | - | - | | | | | |
| | | YD-128S | - | - | | | | | |
| | Component (B) | DICY7 | - | - | 10 | 10 | 10 | 10 | 10 |
| | | DYHARD 100SF | - | - | | | | | |
| | | Amicure Cg-325G | - | - | | | | | |
| | | DICY50 | - | - | | | | | |
| | Component (C) | FC4400 | 0.6 | 0.15 | 2 | | | | |
| | | M2-100R | Solid | 0.8 | | 2 | | | |
| | | CIL-312 | 0.45 | 0.8 | | | 2 | | |
| | | LIPOQUAD 2HP Flake | Solid | 1.4 | | | | 2 | |
| | | IL-A2 | 0.6 | 0.1 | | | | | 2 |
| | | IL-OH9 | 2 | 0.7 | | | | | |
| | | LS-250 | 11 | 1.3 | | | | | |
| | | Ammonium stearate | Solid | 1.5 | | | | | |
| | Ammonium benzoate | | Solid | 2.0 | | | | | |
| Resin properties | Before curing | Non-volatile content [%] | - | - | 99.9 | 99.9 | 99.9 | 99.8 | 99.9 |
| | | Viscosity [Pa·s] | - | - | 22.8 | 24.0 | 24.1 | 24.8 | 22.2 |
| | | Dispersity of component (B) in component (A) | - | - | 0.6 | 0.7 | 0.7 | 0.8 | 0.3 |
| | | Impregnating property (impregnation time) [s] | - | - | 400 | 450 | 480 | 570 | 350 |
| | After curing | Degree of cure [%] | - | - | 90 | 90 | 90 | 90 | 91 |
| | | Heat resistance (glass transition temperature) [°C] | - | - | 120 | 119 | 119 | 118 | 120 |

[Table 1-1-2]

| | | | Viscosity at 25°C [Pa·s] | Area ratio of component (C) in component (A) [%] | Example 6 | Example 7 | Example 8 |
|---|---|---|---|---|---|---|---|
| Composition | Component (A) | jER828 | - | - | 100 | 100 | 100 |
| | | EX-411 | - | - | | | |
| | | YD-128S | - | - | | | |
| | Component (B) | DICY7 | - | - | 10 | 10 | 10 |
| | | DYHARD 100SF | - | - | | | |
| | | Amicure Cg-325G | - | - | | | |
| | | DICY50 | - | - | | | |
| | Component (C) | FC4400 | 0.6 | 0.15 | | | |
| | | M2-100R | Solid | 0.8 | | | |
| | | CIL-312 | 0.45 | 0.8 | | | |
| | | LIPOQUAD 2HP Flake | Solid | 1.4 | | | |
| | | IL-A2 | 0.6 | 0.1 | | | |
| | | IL-OH9 | 2 | 0.7 | 2 | | |
| | | LS-250 | 11 | 1.3 | | 2 | |
| | | Ammonium stearate | Solid | 1.5 | | | 2 |
| | Ammonium benzoate | | Solid | 2.0 | | | |
| Resin properties | Before curing | Non-volatile content [%] | - | - | 99.9 | 99.9 | 99.8 |
| | | Viscosity [Pa·s] | - | - | 22.2 | 25.1 | 24.8 |
| | | Dispersity of component (B) in component (A) | - | - | 0.8 | 0.8 | 0.8 |
| | | Impregnating property (impregnation time) [s] | - | - | 630 | 622 | 610 |
| | After curing | Degree of cure [%] | - | - | 90 | 90 | 93 |
| | | Heat resistance (glass transition temperature) [°C] | - | - | 118 | 119 | 111 |

[Table 1-2-1]

| | | | Viscosity at 25°C [Pa·s] | Area ratio of component (C) in component (Å [%] | Example 9 | Example 10 | Example 11 | Example 12 | Example 13 |
|---|---|---|---|---|---|---|---|---|---|
| Composition | Component (Å | jER828 | - | - | 100 | 50 | 100 | 100 | 100 |
| | | EX-411 | - | - | | 50 | | | |
| | | YD-128S | - | - | | | | | |
| | Component (B) | DICY7 | - | - | 5 | 5 | | | |
| | | DYHARD 100SF | - | - | | | | | 10 |
| | | Amicure Cg-325G | - | - | | | | 10 | |
| | | DICY50 | - | - | | | | 3 | |
| | Component (C) | FC4400 | 0.6 | 0.15 | 2 | 2 | 2 | 2 | |
| | | M2-100R | Solid | 0.8 | | | | | |
| | | CIL-312 | 0.45 | 0.8 | | | | | |
| | | LIPOQUAD 2HP Flake | Solid | 1.4 | | | | | |
| | | IL-A2 | 0.6 | 0.1 | | | | | 2 |
| | | IL-OH9 | 2 | 0.7 | | | | | |
| | | LS-250 | 11 | 1.3 | | | | | |
| | | Ammonium stearate | Solid | 1.5 | | | | | |
| | | Ammonium benzoate | Solid | 2.0 | | | | | |
| Resin properties | Before curing | Non-volatile content [%] | - | - | 99.9 | 99.9 | 99.9 | 99.9 | 99.9 |
| | | Viscosity [Pa·s] | - | - | 18.5 | 0.9 | 30.5 | 32.1 | 22.2 |
| | | Dispersity of component (B) in component (A) | - | - | 0.5 | 0.6 | 0.8 | 0.8 | 0.2 |
| | | Impregnating property (impregnation time) [s] | - | - | 373 | 40 | 655 | 672 | 320 |
| | After curing | Degree of cure [%] | - | - | 89 | 91 | 93 | 88 | 90 |
| | | Heat resistance (glass transition temperature) [°C] | - | - | 118 | 113 | 128 | 116 | 121 |

EP 4 071 214 A1

[Table 1-2-2]

| Composition / Resin properties | | | Viscosity at 25°C [Pa·s] | Area ratio of component (C) in component (A) [%] | Example 14 | Example 15 | Example 16 | Example 17 |
|---|---|---|---|---|---|---|---|---|
| Composition | Component (A) | jER828 | - | - | 100 | 100 | 100 | 100 |
| | | EX-411 | - | - | | | | |
| | | YD-128S | - | - | | | | |
| | Component (B) | DICY7 | - | - | 10 | 10 | 10 | 30 |
| | | DYHARD 100SF | - | - | | | | |
| | | Amicure Cg-325G | - | - | | | | |
| | | DICY50 | - | - | | | | |
| | Component (C) | FC4400 | 0.6 | 0.15 | 0.5 | 5 | 8 | 2 |
| | | M2-100R | Solid | 0.8 | | | | |
| | | CIL-312 | 0.45 | 0.8 | | | | |
| | | LIPOQUAD 2HP Flake | Solid | 1.4 | | | | |
| | | IL-A2 | 0.6 | 0.1 | | | | |
| | | IL-OH9 | 2 | 0.7 | | | | |
| | | LS-250 | 11 | 1.3 | | | | |
| | | Ammonium stearate | Solid | 1.5 | | | | |
| | | Ammonium benzoate | Solid | 2.0 | | | | |
| Resin properties | Before curing | Non-volatile content [%] | - | - | 99.9 | 99.9 | 99.9 | 99.9 |
| | | Viscosity [Pa·s] | - | - | 22.1 | 21.3 | 21.2 | 62.6 |
| | | Dispersity of component (B) in component (A) | - | - | 0.8 | 0.7 | 0.8 | 0.8 |
| | | Impregnating property (impregnation time) [s] | - | - | 600 | 550 | 630 | 720 |
| | After curing | Degree of cure [%] | - | - | 90 | 90 | 90 | 93 |
| | | Heat resistance (glass transition temperature) [°C] | - | - | 119 | 118 | 116 | 111 |

[Table 2-1]

| | | | Viscosity at 25°C [Pa·s] | Area ratio of component (C) in component (A) [%] | Comparative Example 1 | Comparative Example 2 | Comparative Example 3 | Comparative Example 4 |
|---|---|---|---|---|---|---|---|---|
| Composion | Component (A) | jER828 | - | - | 100 | 100 | 100 | |
| | | EX-411 | - | - | | | | |
| | | YD-128S | - | - | | | | 100 |
| | Component (B) | DICY7 | - | - | 10 | 10 | 5 | 20 |
| | | DYHARD 100SF | - | - | | | | |
| | | Amicure Cg-325G | - | - | | | | |
| | | DICY50 | - | - | | | | |
| | Component (C) | FC4400 | 0.6 | 0.15 | | | | 2 |
| | | M2-100R | Solid | 0.8 | | | | |
| | | CIL-312 | 0.45 | 0.8 | | | | |
| | | LIPOQUAD 2HP Flake | Solid | 1.4 | | | | |
| | | IL-A2 | 0.6 | 0.1 | | | | |
| | | IL-OH9 | 2 | 0.7 | | | | |
| | | LS-250 | 11 | 1.3 | | | | |
| | | Ammonium stearate | Solid | 1.5 | | | | |
| | Ammonium benzoate | | Solid | 2.0 | | 2 | | |

| | | | Viscosity at 25°C [Pa·s] | Area ratio of component (C) in component (A) [%] | Comparative Example 1 | Comparative Example 2 | Comparative Example 3 | Comparative Example 4 |
|---|---|---|---|---|---|---|---|---|
| Resin properties | Before curing | Non-volatile content [%] | - | - | 99.9 | 99.7 | 99.9 | 99.9 |
| | | Viscosity [Pa·s] | - | - | 22.6 | 25.1 | 18.8 | 110.2 |
| | | Dispersity of component (B) in component (A) | - | - | 1.0 | 1.2 | 1.0 | 0.8 |
| | | Impregnating property (impregnation time) [s] | - | - | 680 | 1070 | 564 | 2951 |
| | After curing | Degree of cure [%] | - | - | 90 | 90 | 92 | 92 |
| | | Heat resistance (glass transition temperature) [°C] | - | - | 120 | 119 | 123 | 123 |

[Table 2-2]

| | | | Viscosity at 25°C [Pa·s] | Area ratio of component (C) in component (A) [%] | Comparative Example 5 | Comparative Example 6 | Comparative Example 7 |
|---|---|---|---|---|---|---|---|
| Composition | Component (A) | jER828 | - | - | 100 | 100 | 100 |
| | | EX-411 | - | - | | | |
| | | YD-128S | - | - | | | |
| | Component (B) | DICY7 | - | - | 30 | 55 | 10 |
| | | DYHARD 100SF | - | - | | | |
| | | Amicure Cg-325G | - | - | | | |
| | | DICY50 | - | - | | | |
| | Component (C) | FC4400 | 0.6 | 0.15 | | 2 | 15 |
| | | M2-100R | Solid | 0.8 | | | |
| | | CIL-312 | 0.45 | 0.8 | | | |
| | | LIPOQUAD 2HP Flake | Solid | 1.4 | | | |
| | | IL-A2 | 0.6 | 0.1 | | | |
| | | IL-OH9 | 2 | 0.7 | | | |
| | | LS-250 | 11 | 1.3 | | | |
| | | Ammonium stearate | Solid | 1.5 | | | |
| | | Ammonium benzoate | Solid | 2.0 | | | |
| Resin properties | Before curing | Non-volatile content [%] | - | - | 99.9 | 99.9 | 99.9 |
| | | Viscosity [Pa·s] | - | - | 62.1 | 140.7 | 19.6 |
| | | Dispersity of component (B) in component (A) | - | - | 1.3 | 1.4 | 1.2 |
| | | Impregnating property (impregnation time) [s] | - | - | 823 | 4100 | 930 |
| | After curing | Degree of cure [%] | - | - | 93 | 95 | 87 |
| | | Heat resistance (glass transition temperature) [°C] | - | - | 111 | 101 | 108 |

[Table 3-1]

| | | | Viscosity at 25°C [Pa·s] | Area ratio of component (C) in component (A) [%] | Example 18 | Example 19 | Example 20 |
|---|---|---|---|---|---|---|---|
| Composition | Component (A) | jER828 | - | - | 70 | 70 | 100 |
| | | jER154 | - | - | 20 | 20 | |
| | | EX-411 | - | - | | | |
| | | YD-128S | - | - | | | |
| | | EX-614 | - | - | 10 | 10 | |
| | Component (B) | DICY7 | - | - | 8 | 8 | 10 |
| | Component (C) | FC4400 | 0.6 | 0.15 | 2 | | 2 |
| | | M2-100R | Solid | 0.8 | | | |
| | | CIL-312 | 0.45 | 0.8 | | | |
| | | LIPOQUAD 2HP Flake | Solid | 1.4 | | | |
| | | IL-A2 | 0.6 | 0.1 | | 2 | |
| | | IL-OH9 | 2 | 0.7 | | | |
| | | LS-250 | 11 | 1.3 | | | |
| | | Ammonium stearate | Solid | 1.5 | | | |
| | Ammonium benzoate | | Solid | 2.0 | | | |
| | Component (D) | 1,4-Butanediamine | - | - | 11 | 11 | |
| | | M20S | - | - | | | 10 |
| Resin properties | Before curing | Non-volatile content [%] | - | - | 99.8 | 99.9 | 99.9 |
| | | Viscosity [Pa·s] | - | - | 5.7 | 5.8 | 17.9 |
| | | Dispersity of component (B) in component (A) | - | - | 0.6 | 0.4 | 0.7 |
| | | Impregnating property (impregnation time) [s] | - | - | 305 | 313 | 370 |
| | After curing | Degree of cure [%] | - | - | 90 | 91 | 91 |
| | | Heat resistance (glass transition temperature) [°C] | - | - | 131 | 132 | 136 |

(continued)

| | | Viscosity at 25°C [Pa·s] | Area ratio of component (C) in component (A) [%] | Example 18 | Example 19 | Example 20 |
|---|---|---|---|---|---|---|
| SMC properties | Dispersity of component (B) in thickened resin | - | - | 0.7 | 0.6 | 0.8 |
| | SMC impregnating property | - | - | Good | Good | Good |
| Fiber-reinforced composite material properties | Appearance quality | - | - | Good | Good | Good |
| | Bending strength [MPa] | - | - | 328 | 330 | 333 |
| | CV value of bending strength [%] | - | - | 7.1 | 6.4 | 8.5 |

[Table 3-2]

| Composition | | | Viscosity at 25°C [Pa s] | Area ratio of component (C) in component (A) [%] | Comparative Example 8 | Comparative Example 9 | Comparative Example 10 |
|---|---|---|---|---|---|---|---|
| | Component (A) | jER828 | - | - | 70 | 100 | 100 |
| | | jER154 | - | - | 20 | | |
| | | EX-411 | - | - | | | |
| | | YD-128S | - | - | | | |
| | | EX-614 | - | - | 10 | | |
| | Component (B) | DICY7 | - | - | 8 | 10 | 10 |
| | Component (C) | FC4400 | 0.6 | 0.15 | | | |
| | | M2-100R | Solid | 0.8 | | | |
| | | CIL-312 | 0.45 | 0.8 | | | |
| | | LIPOQUAD 2HP Flake | Solid | 1.4 | | | |
| | | IL-A2 | 0.6 | 0.1 | | | |
| | | IL-OH9 | 2 | 0.7 | | | |
| | | LS-250 | 11 | 1.3 | | | |
| | | Ammonium stearate | Solid | 1.5 | | | |
| | Ammonium benzoate | | Solid | 2.0 | | | 2 |
| | Component (D) | 1,4-Butanediamine | - | - | 11 | | |
| | | M20S | - | - | | 10 | 10 |

(continued)

| | | | Viscosity at 25°C [Pa s] | Area ratio of component (C) in component (A) [%] | Comparative Example 8 | Comparative Example 9 | Comparative Example 10 |
|---|---|---|---|---|---|---|---|
| Resin properties | Before curing | Non-volatile content [%] | - | - | 99.8 | 99.7 | 99.7 |
| | | Viscosity [Pa·s] | - | - | 5.7 | 18.4 | 20.6 |
| | | Dispersity of component (B) in component (A) | - | - | 1.1 | 1.2 | 1.3 |
| | | Impregnating property (impregnation time) [s] | - | - | 421 | 540 | 793 |
| | After curing | Degree of cure [%] | - | - | 90 | 90 | 90 |
| | | Heat resistance (glass transition temperature) [°C] | - | - | 131 | 134 | 134 |
| SMC properties | | Dispersity of component (B) in thickened resin | - | - | 1.3 | 1.3 | 1.5 |
| | | SMC impregnating property | - | - | Poor | Poor | Poor |
| Fiber-reinforced composite material properties | | Appearance quality | - | - | Poor | Poor | Poor |
| | | Bending strength [MPa] | - | - | 318 | 321 | 310 |
| | | CV value of bending strength [%] | - | - | 17.4 | 18.3 | 19.6 |

INDUSTRIAL APPLICABILITY

The epoxy resin composition of the present invention is excellent in dispersibility of a solid curing agent and the impregnating property into a reinforcing fiber as compared with conventional epoxy resin compositions and is excellent because the epoxy resin composition provides a molding material for a fiber-reinforced composite material that has little unevenness in physical properties after curing and has good appearance quality and further provides a fiber-reinforced composite material excellent in appearance quality and mechanical properties by using such a molding material for a fiber-reinforced composite material. As a result, it is suitably used for fibers and the like throughout the applications such as sports and industrial applications in addition to aerospace applications and automobile applications.

**Claims**

1. An epoxy resin composition comprising all of components (A) to (C) below,

   wherein a dispersity of the component (B) in the component (A) is 0.1 to 0.8,
   a viscosity at 25°C is 0.1 to 100 Pa·s, and
   a glass transition temperature of a cured epoxy resin at any degree of cure in a range of 85 to 95% is 110°C or higher:

      the component (A): an epoxy resin having two or more epoxy groups in a molecule;
      the component (B): a solid curing agent; and
      the component (C): a dispersant compatible with the component (A).

2. The epoxy resin composition according to claim 1, wherein a content of the component (C) is 0.1 to 10 parts by mass with respect to 100 parts by mass of the component (A) .

3. The epoxy resin composition according to claim 1 or 2, wherein the component (B) has a mean particle diameter of 0.5 to 50 $\mu$m.

4. The epoxy resin composition according to any one of claims 1 to 3, wherein a content of the component (B) is 1 to 50 parts by mass with respect to 100 parts by mass of the component (A).

5. The epoxy resin composition according to any one of claims 1 to 4, wherein a content of a non-volatile component is 95 mass% or more.

6. A molding material for a fiber-reinforced composite material, comprising:

      a thickened resin; and
      a reinforcing fiber,
      wherein the thickened resin is obtained by bringing the epoxy resin composition according to any one of claims 1 to 5 into a semi-cured condition.

7. The molding material for a fiber-reinforced composite material according to claim 6, wherein the dispersity of the component (B) in the thickened resin is 0.1 to 1.0.

8. The molding material for a fiber-reinforced composite material according to claim 6 or 7, wherein the reinforcing fiber is a carbon fiber.

9. A fiber-reinforced composite material comprising a molded product of the molding material for a fiber-reinforced composite material according to any one of claims 6 to 8.

| | INTERNATIONAL SEARCH REPORT | International application No. |
|---|---|---|
| | | PCT/JP2021/002755 |

**A.  CLASSIFICATION OF SUBJECT MATTER**
C08L 63/00(2006.01)i; C08J 5/04(2006.01)i
FI: C08L63/00; C08J5/04 CFC

According to International Patent Classification (IPC) or to both national classification and IPC

**B.  FIELDS SEARCHED**

Minimum documentation searched (classification system followed by classification symbols)
C08L63/00; C08J5/04

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | WO 2019/225442 A1 (TORAY INDUSTRIES, INC.) 28 November 2019 (2019-11-28) claim 1, paragraphs [0034], [0059] example 1 | 1-9 |
| Y | JP 2017-019977 A (AJINOMOTO CO., INC.) 26 January 2017 (2017-01-26) claims 1, 3, 7-8, 11 | 1-9 |
| A | WO 2018/181849 A1 (NIPPON STEEL & SUMIKIN CHEMICAL CO., LTD.) 04 October 2018 (2018-10-04) the whole document | 1-9 |
| A | WO 2018/066600 A1 (MITSUBISHI CHEMICAL CORPORATION) 12 April 2018 (2018-04-12) the whole document | 1-9 |
| A | WO 2019/181402 A1 (DOW TORAY CO., LTD.) 26 September 2019 (2019-09-26) the whole document | 1-9 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 March 2021 (25.03.2021) | 06 April 2021 (06.04.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/002755

| Patent Documents referred in the Report | Publication Date | Patent Family | Publication Date |
|---|---|---|---|
| WO 2019/225442 A1 | 28 Nov. 2019 | (Family: none) | |
| JP 2017-019977 A | 26 Jan. 2017 | (Family: none) | |
| WO 2018/181849 A1 | 04 Oct. 2018 | TW 201841970 A the whole document | |
| WO 2018/066600 A1 | 12 Apr. 2018 | US 2019/0225764 A1 the whole document CN 109790311 A the whole document | |
| WO 2019/181402 A1 | 26 Sep. 2019 | TW 201940564 A the whole document | |

Form PCT/ISA/210 (patent family annex) (January 2015)

**EP 4 071 214 A1**

**Patent documents cited in the description**

- JP 2003213015 A

- JP H02286722 A